# EUROPEAN PATENT APPLICATION

(11) **EP 4 032 393 A1**
(43) Date of publication of application: **27.07.2022**
(21) Application number: 21425001.1
(22) Date of filing: 22.01.2021
(51) Int. Cl.: A01G 2/38

(54) **GRAFTING CLIP FOR PLANT INDIVIDUALS AND ASSEMBLY COMPRISING SAID CLIP**

(71) Applicant: LUCHETTI S.R.L., 60027 Osimo (AN) (IT)
(72) Inventor: Luchetti, Roberto, 60027 Osimo (AN) (IT); Spettatori, Daniele, 60022 Castelfidardo (AN) (IT)
(74) Representative: Baldi, Claudio

(57) **Abstract**

Grafting clip (1) for plant individuals (P1, P2); said clip (1) comprising two levers (10) that are hinged one to the other along a hinging axis (Y); each lever (10) comprises a movable section (11) and an operating section (12); said operating section (12) comprising an internal side (12a) suitable for going in contact with the individuals to be grafted; the clip (1) can be disposed in a closing position, wherein the two operating sections (12) are moved closer to each other, and an opening position, wherein the two operating sections (12) are moved apart; the clip (1) also comprises elastic return means (13) suitably configured to dispose said clip in idle in closing position; the peculiarity of the clip (1) consists in the fact that each lever comprises a hole (F) provided in the moving section (11); movable arms (2) of a holding and moving device (D) are suitable for being inserted/released into/from the two holes (F) in order to move the clip between said closing position and said opening position.

## Description

The present patent application for industrial invention relates to a clip for the grafting of two different plant individuals, as well as to an assembly comprising said clip.

As it is known, the term "grafting" refers to an agronomic practice that consists in uniting two plant individuals in order to obtain a new individual.

It must be noted that, in this patent application, the term "plant individuals" refers to each one of the two parts of a plant that are grafted. In particular, the part of the plant that receives the graft and provides the rooted part is defined as "rootstock", whereas the part of the plant that is grafted in the rootstock is defined as "scion" or "graft".

The individual obtained from grafting has the same characteristics as the graft and is affected by the rootstock in several aspects.

The phenomenon according to which two different individuals (parts of a plant) can be united, generating a new plant individual, is related to the histological structure of the two individuals. The union is obtained by means of a cicatricial callus that is formed on the freshly cut surfaces of the two individuals. In fact, undifferentiated cells are present on the surfaces of the two plant individuals; following to the coupling of the two surfaces, the undifferentiated cells are differentiated, generating a layer that joins the two surfaces. With the passing of time, the layer keeps on growing, joining the vascular tissues of the two plant individuals, and causing the union of the two plant individuals and the taking root of the graft.

As it is known, grafting has several advantages, namely:
- better production: the selection of a suitable rootstock improves the quality of the fruits or flowers produced by the graft;
- better ground adaptability: the selection of a suitable rootstock makes it possible to grow fruits or flower plants in grounds where they would not survive normally;
- better resistance: the selection of a suitable rootstock increases the resistance of the graft to parasites or pathogen agents.

In particular, the present invention is devised for the grafting of garden plants, vegetable plants, Cucurbitaceae, flower plants and the like, i.e. plants with tender stems and small size.

As it is known, in order to graft said plants (or individuals), an oblique cut is made on the external surface of the stem of the rootstock and an ending part of the graft is inserted in said cut.

Alternatively, a longitudinal cut is made in the top of the rootstock (which can be also defined as "top cut") and an ending part of the graft is inserted in said cut, after being suitably cut and shaped.

In order to favor the taking root of the graft, a first method provides for wrapping the two individuals with cellophane in such a way to unite them.

Such a solution is a very complicated and time-consuming.

According to a second method, plastic clips are used to clip and hold the two individuals together in the grafting area.

An ordinary clip comprises two levers that are hinged one to the other, each one comprising a (holding) movable section, and an operating section with an internal side suitable for going in contact with and pushing against at least one of the two plant individuals. The clip can be moved between an opening position, wherein the operating sections are moved apart, and a closing position, wherein the operating sections are moved closer and joined. Moreover, the clip comprises elastic return means that are suitably configured to exert an action on the two levers in such a way that the clip is idle in closing position.

In order to apply the clip on the two plants to be grafted, a user must hold the movable sections with two fingers and exert a suitable force with his/her fingers in order to overcome the resistance provided by the elastic return means, in such a way to move the movable sections closer and consequently move the two operating sections apart. Successively, the clip in opening position is moved closer to the grafting area until the two individuals are disposed between the two operating sections in spread-apart position. After positioning the clip in the correct direction, the user releases the two movable sections, in such a way to position the clip in closing position and join the two individuals in the grafting area.

The use of the clip is simpler and faster compared to the solution with cellophane, and therefore such a solution is more suitable for being used in a greenhouse or in a field where grafting is largely used.

Although the use of the clips makes the joining of the grafts more rapid, it must be noted that said clips are impaired by some drawbacks, especially in the case of a greenhouse or a field where grafting is largely used. In such a case, the operator must apply said clip by hand for each graft. The operation is repetitive and extremely annoying; moreover, the movement made by the operator to bring the two movable sections closer, overcoming the force provided by the elastic return means, will originate blisters on the user's fingers over time.

Furthermore, considering that the operation is made by hand by a user, accuracy is impaired because, in spite of his/her skills and experience, the operator may make an imperceptible movement before releasing the clip on the graft, causing an incorrect positioning and consequently reducing the probability of a good outcome of the grafting.

A careful observation of the aforesaid problems has resulted in the present invention, which consists in a new clip and in an assembly comprising said clip that is suitable for facilitating the application of the clip on the graft.

Otherwise said, the purpose of the present invention is to devise a clip and an assembly that allows for applying the clip on the graft in an automatic way, thus reducing and facilitating the work of an operator.

These purposes are achieved according to the invention with the characteristics that are listed in the appended independent claim 1. Advantageous embodiments will appear from the dependent claims. The clip according to the invention is defined by claim 1.

The assembly according to the invention is defined by claim 6.

For the sake of clarity, the description of the clip and of the assembly comprising the clip of the invention continues with reference to the appended drawings, which have a merely illustrative, not limiting value, wherein:
Fig. 1 is an axonometric view of the clip of the invention;
Fig. 2 is a top view of the clip of the invention;
Fig. 3 and 4 are two top views of the assembly according to the invention; in said Figs. 3 and 4 said clip is disposed in closing position and in opening position, respectively;
Figs. 3A and 4A are two top views of the clip and of the mobile arms, the latter being cross-sectioned and inserted in the holes of the clip; in said Figs. 3A and 4A the clip is disposed in closing position and in opening position, respectively, and the mobile arms and the holes are coupled by means of a toothed coupling system;
Fig. 5 is a side view of the assembly according to the invention;
Figs. 6, 7, 8, 9 and 10 are diagrammatic axonometric views that illustrate, step by step, an application mode of the clip on a graft by means of the assembly according to the invention;
Fig. 11 is an axonometric view of an alternative embodiment of the assembly according to the invention.

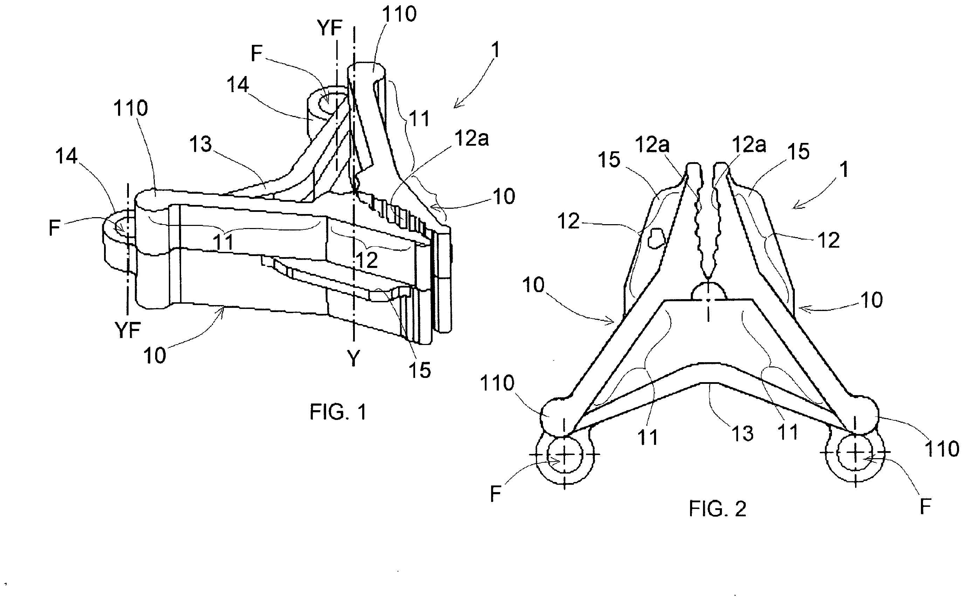

With reference to Figs. 1 and 2, a clip according to the invention is disclosed, it being generally indicated with reference numeral (1).

The clip (1) is suitable for being used as holding means in the grafting of the two plant individuals (P1, P2), namely a rootstock (P1) and a graft (P2).

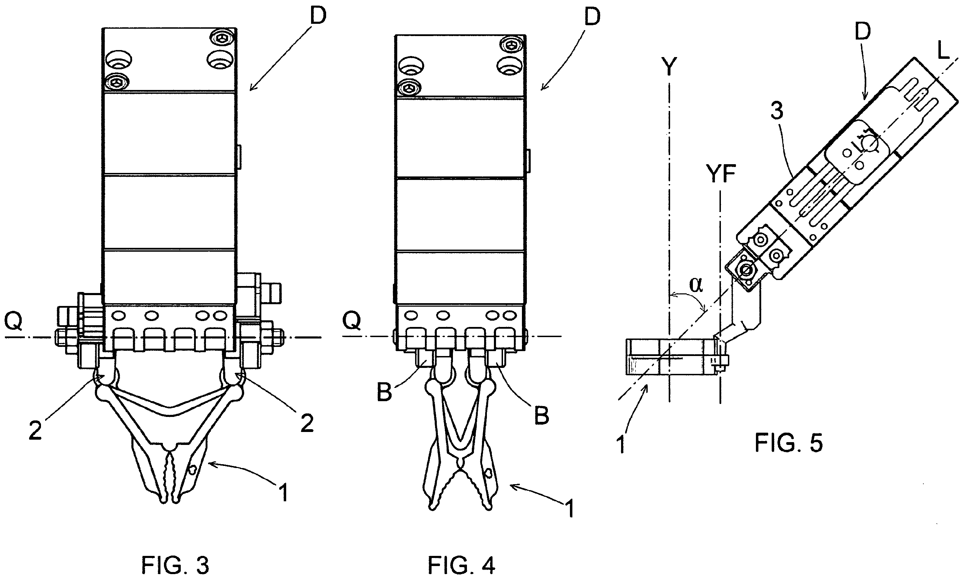

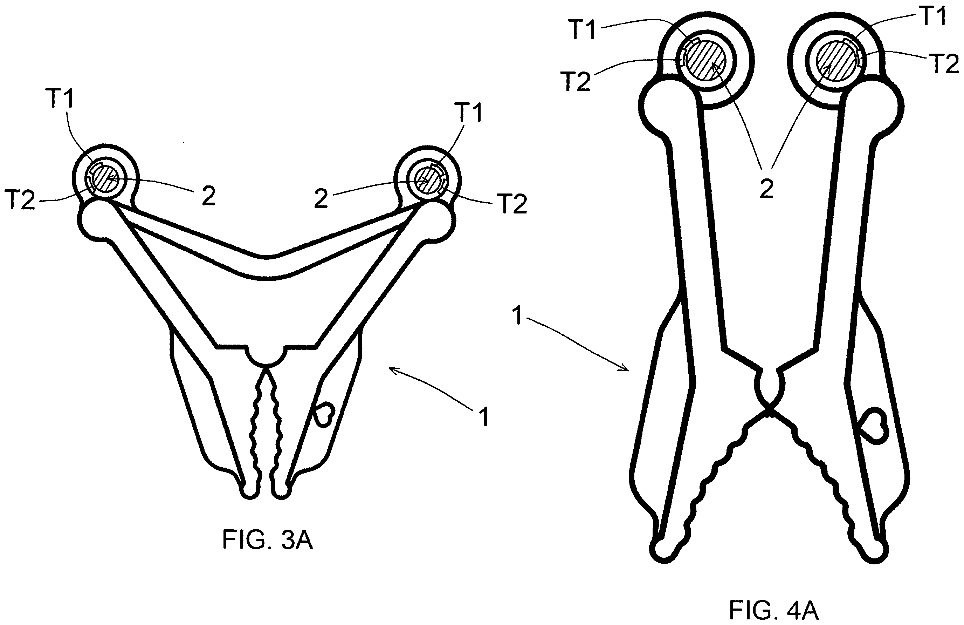

The clip (1) is part of an assembly that is shown in detail in Figs. 3 and 4, also comprising a holding and moving device (D) for said clip (1).

The clip (1) comprises two levers (10) that are hinged one to the other one along a hinging axis (Y). Each lever (10) comprises a movable section (11) and an operating section (12). The operating section (12) of each lever (10) comprises an internal side (12a) suitable for going in contact with at least one of said plant individuals (P1, P2).

Preferably, the internal side (12a) of each operating section (12) comprises knurls/ribs to increase the grip of the operating sections (12) with the plant individuals (P1, P2).

By moving the two movable sections (11), the clip (1) can be alternately disposed in:
- a closing position, wherein the two operating sections (12) are moved closer and the two movable sections (11) are moved apart, and
- an opening position, wherein the two operating sections (12) are moved apart and the two movable sections (11) are moved closer.

The clip (1) also comprises elastic return means (13) suitably configured to exert an action on the two levers (10) in such a way that said clip (1) is idle in the closing position, as shown in Figs. 1 and 2.

In particular, the elastic return means (13) comprise an elastically flexible strip that is joined to the movable sections (11) of the two levers (10). The strip constantly pushes the two movable sections (11) of the two levers (10) in such a way to move them apart and bring the clip in idle in the closing position. The flexible strip has a concavity in the opposite direction with respect to the place where the two operating sections (12) are positioned.

Alternately, said elastic return means (13) may comprise a compressed helical spring that is joined to the movable sections (11) of the two levers (10).

The two levers (10) are hinged one to the other by means of a strip of material that extends along the axis (Y) between the two levers (10).

The clip (1) is preferably made of a plastic material, such as low-density polyethylene or polymers.

Advantageously, each lever (10) comprises a stiffening tab (15) that extends on an external side of the first section (11) and on an external side of the second section (12), preventing the second section (12) from bending with respect to the first section (11) when the second sections (12) of the two levers (10) are holding the individuals (P1, P2).

The peculiarity of the clip (1) according to the invention consists in the fact that each lever (10) comprises a hole (F) with an axis (Yf) disposed on the movable section (11) and parallel to the hinging axis (Y). Movable arms (2) of the holding and moving device (D) are housed in the two holes (F) (see Figs. 3, 4 and 5), and are suitable for moving said clip (1) between said closing position and said opening position.

The two movable arms (2) will be described afterwards.

With reference to the clip (1) and to Figs. 1 and 2, each hole (F) is disposed at one end (110) of the movable section (11). In particular, the hole (F) is obtained in an eyelet (14) and is a through hole (F) with circular section.

Being the hole (F) a through hole, the two arms can be inserted in the hole (F) from either side of the hole (F).

The holding and moving device (D) comprises said movable arms (2) that are suitable for being inserted in the holes (F), and also comprises moving means (not shown in the appended figures) that are suitably configured to move the two arms apart and closer along an axis (Q).

When the movable arms (2) are inserted in the holes (F) and coupled with said holes (F), the movement of the movable arms (2) along the axis (Q) allows to move the clip (1) between the closing position and the opening position.

Each movable arm (2) comprises a first section (21), a second section (22) inclined with respect to the first section (21), and an ending section (23) inclined with respect to the second section (22).

The first section (21) is substantially shaped like a plate, whereas the second section (22) and the ending section (23) have a circular section. The ending section (23) is the section of the movable arm (2) suitable for being inserted in one of said holes (F) of the clip (1).

In order to move and hold the clip (1) in suspended position, the movable arm (2), and specifically the ending section (23), and the hole (F) must be coupled to prevent the clip (1) from being released from the movable arms (2).

According to the preferred embodiment of the invention, the holes (F) and the movable arms (2) are coupled by means of interference.

Otherwise said, said hole (F) and said ending section (23) of the movable arm (2) are suitably dimensioned in such a way that:
- when the clip (1) is not clipped to an element, the clip (1) is joined to the two arms because of the interference between the internal surface of the holes and the external surface of the ending sections;
- when the clip (1) is clipped to an element (namely, on the plant individuals (P1, P2)), the two movable arms (2) can be released from the holes (F) in such a way that the clip (1) is no longer joined to the two movable arms (2).

Otherwise said, the holes (F) and the movable arms (2) are coupled by means of a slight interference that allows the two movable arms (2) to support and move the clip (1) when the clip (1) is not clipped to the individuals (P1, P2) and to release the clip (1) when the clip (1) is clipped to the individuals (P1, P2).

According to an alternative embodiment of the invention, which is diagrammatically shown in Figs. 3A and 4A, each movable arm (2) and the hole (F) can be coupled by means of a toothed coupling system (T1, T2) that allows each movable arm (2) to be inserted and released freely from the hole (F), when the clip (1) is in the opening position, and to remain coupled with the hole (F) when the clip (1) is in the closing position.

For illustrative purposes, with reference to Fig. 3A and 4A, said toothed coupling system (T1, T2) comprises a first tooth (T1) that protrudes externally from the external surface of the movable arm (2), and a second tooth (T2) that protrudes from the lateral surface of the hole (F). When the clip (1) is in opening position (Fig 3A), the two teeth (T1, T2) are not aligned and the movable arm (2) can slide freely inside the hole (F). When the movable arms are inserted in the holes (F) and the first teeth (T1) are disposed at a lower level than the second teeth (T2), when the movable arms (2) are moved closer, each hole is relatively rotated with respect to the movable arm (2), determining the alignment of the two teeth (T1, T2), at least partially. Consequently, when the clip (1) is in opening position (see Fig. 4A), the two teeth (T1, T2) interfere one with the other and the clip (1) is supported by the movable arms (2).

Preferably, said holding and moving device (D) comprises a box body (3) that contains the moving means.

The movable arms (2) are joined to the moving means by means of two blocks (B) that protrude from the body (3). Each movable arm (2) is joined to one of said blocks (B) by means of a bolt that is inserted in a hole obtained in the first section (21) of the movable arm (2), and in a hole obtained in the block (B).

The moving means may comprise a pneumatic system or a mechanical system with a motor and gears. The moving means may comprise any type of moving system that is known to an expert of the field, provided that it is suitable for automatically moving said two movable arms (2).

With reference to Fig. 5, the box body (3) has a longitudinal axis (L). The longitudinal axis (L) and the hinging axis (Y) are inclined by an angle (α) comprised between 35° and 60°, preferably 45°.

The assembly is preferably suitable for being mounted on supporting and moving means in order to move said holding and moving device (D) in a 3D space.

In particular, the supporting and moving means may comprise a robot with three linear axes or a robot with three rotary axes, or a mixed robot with linear and rotary axes.

The supporting and moving means will be moved according to signals received from sensors and position/orientation detectors in such a way to position the clip (1) correctly in correspondence of the grafting between two individuals (P1, P2).

Although the assembly has been originally designed to be supported by said automatic supporting and moving means, the assembly can also be operated manually by the operator.

Otherwise said, an operator can support and move the holding and moving device (D), grabbing it with one hand, and simultaneously move the two movable arms (2) closer or farther along the axis (Q) by pressing buttons provided on the holding and moving device (D) to activate said moving means for said movable arms (2).

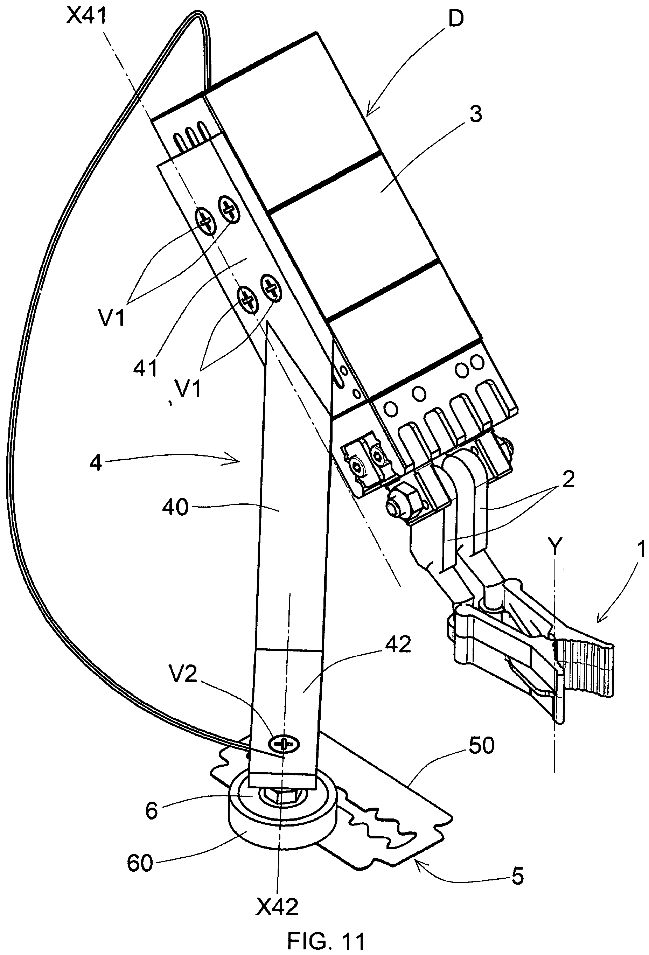

Advantageously, with reference to Fig. 11, in a preferred embodiment of the assembly according to the invention, said assembly also comprises:
- a connection arm (4) comprising a first ending section (41) fixed to the holding and moving device (D), and a second ending section (42) substantially disposed at the same level as the clip (1); and
- a blade (5) fixed to the second ending section (42) and lying on a plane orthogonal to the hinging axis (Y); said blade (5) comprising a cutting edge (50) that faces the clip (1).

The first ending section (41) and the second ending section (41, 42) have skewed longitudinal axes (X41, X42) and are joined by means of an intermediate connection section (40) having a longitudinal axis incident to the two longitudinal axes (X41, X42) of the two ending sections (41, 42).

The first ending section (41) is fixed to the device by means of fixing screws (V1).

Said assembly also comprises an electromagnet (6) fixed to the second end (42) of the connection arm (4) that connects said blade (5) to said second end (42) by means of magnetic attraction.

Said electromagnet (6) is mounted on a support (60) of suitable shape that is fixed to the second section by means of a fixing screw (V2).

After uniting the two individuals (P1, P2), the provision of the blade (5) allows for cutting the ending sections of the individuals (P1, P2) by simply moving the device in such a way that the blade (5) intercepts one of the two individuals (P1, P2) in order to remove parts of the graft (P2) or of the rootstock (P1).

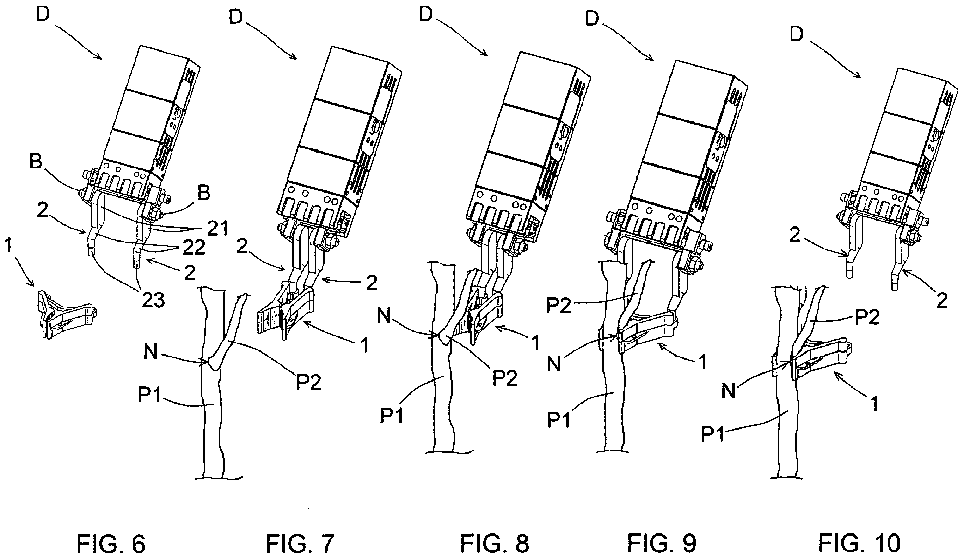

With reference to Figs. 6, 7, 8, 9 and 10, an application method of the clip (1) in the grafting area (N) of two individuals (P1, P2) is described afterwards, step by step.

Firstly, the movable arms (2) are moved apart. With reference to Fig. 6, a clip (1) is picked, inserting the movable arms (2) in the holes (F) of the clip (1).

The clip (1) remains joined to the movable arms (2) because of the interference generated between the surface of the hole and the external surface of the ending section (23) of the arm (2), or because of the interference and the contact between the two teeth (T1, T2) when the aforesaid toothed coupling system is used. Evidently, when the aforesaid toothed coupling system is used, before lifting the holding and moving device (D), it will be necessary to move the two movable arms (2) closer in such a way that the teeth (T1, T2) are overlapped with mutual interference.

When the clip (1) is joined to the movable arms, the holding and moving device (D) is moved automatically by a robot or manually by an operator until the clip (1) (in opening position) is disposed in correspondence of the grafting area (N).

When the clip (1) is positioned correctly, the two movable arms (2) are moved apart in such a way that the two individuals (P1, P2) are clipped in the grafting area by the two operating sections (12), as shown in Fig. 9.

Finally, with reference to Fig. 10, the holding and moving device (D) is lifted in such a way that the movable arms (2) are released from the holes (F) and the clip (1) can hold the two individuals (P1, P2) to favor the taking root of the graft.

The advantages of the present invention are manifest after the preceding description.

Firstly, because of the present invention, the operator does not have to continuously pick the clip with his/her fingers and move it from the opening position to the closing position, making the operation much easier.

Moreover, when the holding and moving device (D) is mounted on an automatic robot, the clipping of the graft is extremely rapid and accurate, making the present invention especially suitable for being used in a greenhouse or in any other place where grafting is largely used.

Numerous equivalent variations and modifications, which are within the reach of an expert of the field and fall in any case within the scope of the invention as disclosed by the appended claims, can be made to the present embodiment of the invention.

## Claims

1. Grafting clip (1) for plant individuals (P1, P2); said clip (1) comprising:
- two levers (10) that are hinged one to the other along a hinging axis (Y); wherein each lever (10) comprises a movable section (11) and an operating section (12); said operating section (12) of each lever (10) comprising an internal side (12a) suitable for going in contact with at least one of said individuals (P1, P2) to be grafted; said clip (1) being suitable for being disposed in a closing position, wherein the two operating sections (12) are moved closer, and an opening position, wherein the two operating sections (12) are moved apart;
- elastic return means (13) suitably configured to exert an action on the two levers (10) in such a way that said clip (1) is idle in closing position;
**characterized in that** each lever (10) comprises a hole (F) with an axis (Yf) parallel to the hinging axis (Y) and is disposed on the movable section (11); mobile arms (2) of a holding and moving device (D) being provided to be inserted/released into/from said two holes (F) for moving said clip (1) between said closing position and said opening position.

2. The clip (1) of claim 1, wherein said hole (F) is disposed at one end (110) of the movable section (11).

3. The clip (1) of claim 1 or 2, wherein said movable section (11) comprises an eyelet (14); said hole (F) being a circular through hole and being obtained in said eyelet (14).

4. The clip (1) according to any one of the preceding claims, wherein said elastic return means (13) comprise an elastically flexible strip that is joined to the movable sections (11) of the two levers (10) in order to constantly push the two movable sections (11) of the two levers (10), moving said two movable sections (11) apart and positioning the clip (1) in idle in closing position.

5. The clip (1) of any one of the preceding claims, wherein said clip (1) is made with low-density polyethylene and/or polymers.

6. Assembly comprising:
- a clip (1) according to any one of the preceding claims, and
- a holding and moving device (D) for automatically holding and moving said clip (1); said device (D) comprising:
a) two mobile arms (2) in parallel position and suitable for being inserted in the hole (F) of a lever (10) of the clip (1);
b) moving means for moving the two arms closer and apart along an axis (Q).

7. The assembly of claim 6, when said clip (1) is according to claim 3, wherein each mobile arm (2) comprises a circular ending section (20) suitable for being inserted in the circular hole (F).

8. The assembly of claim 6 or 7, wherein said holding and moving device (D) comprises a body (3) with a longitudinal axis (L); wherein said longitudinal axis (L) and said hinging axis (Y) are inclined by an angle (α) comprised between 35° and 60°, preferably 45°.

9. The assembly according to any one of claims 6 to 8, comprising:
- a connection arm (4) comprising a first ending section (41) fixed to the moving and supporting device (D), and a second ending section (42) disposed at the height of the clip (1); and
- a blade (5) fixed to the second ending section (42) and lying on a plane orthogonal to the hinging axis (Y); said blade (5) comprising a cutting edge (50) that faces the clip (1).

10. The assembly of claim 9, wherein said blade is made of a metal material; said assembly comprising an electromagnet fixed to the second end (42) of the connection arm (4) that connects said blade (5) to said second end (42) by means of magnetic attraction

## Amended claims

### Amended claims in accordance with Rule 137(2) EPC.

1. Assembly comprising:
- a clip (1), and
- a holding and moving device (D) for automatically holding and moving said clip (1);
wherein said clip (1) comprises:
- two levers (10) hinged one to the other along a hinging axis (Y); wherein each lever (10) comprises a movable section (11) and an operating section (12); said operating section (12) of each lever (10) comprising an internal side (12a) suitable for going in contact with at least one plant individual (P1, P2) to be grafted; said clip (1) being suitable for being disposed in a closing position, wherein the two operating sections (12) are moved closer, and an opening position, wherein the two operating sections (12) are moved apart; and
- elastic return means (13) suitably configured to exert an action on the two levers (10) in such a way that said clip (1) is idle in closing position;
wherein each lever (10) comprises a hole (F) with an axis (Yf) parallel to the hinging axis (Y) and is disposed on the movable section (11);
wherein said device (D) comprising:
a) two mobile arms (2) in parallel position and suitable for being inserted in the hole (F) of a lever (10) of the clip (1);
b) moving means for moving the two arms closer and apart along an axis (Q).

2. The assembly of claim 1, when said movable section (11) of said clip (1), comprises an eyelet (14); said hole (F) being a circular through hole and being obtained in said eyelet (14);
wherein each mobile arm (2) comprises a circular ending section (20) suitable for being inserted in the circular hole (F).

3. The assembly of claim 1 or 2, wherein said holding and moving device (D) comprises a body (3) with a longitudinal axis (L); wherein said longitudinal axis (L) and said hinging axis (Y) are inclined by an angle (α) comprised between 35° and 60°, preferably 45°.

4. The assembly according to any one of claims 1 to 3, comprising:
- a connection arm (4) comprising a first ending section (41) fixed to the moving and supporting device (D), and a second ending section (42) disposed at the height of the clip (1); and
- a blade (5) fixed to the second ending section (42) and lying on a plane orthogonal to the hinging axis (Y); said blade (5) comprising a cutting edge (50) that faces the clip (1).

5. The assembly of claim 4, wherein said blade is made of a metal material; said assembly comprising an electromagnet fixed to the second end (42) of the connection arm (4) that connects said blade (5) to said second end (42) by means of magnetic attraction.

6. The assembly of anyone of preceding claims, wherein said hole (F) is disposed at one end (110) of the movable section (11).

7. The assembly of anyone of preceding claims, wherein said elastic return means (13) comprise an elastically flexible strip that is joined to the movable sections (11) of the two levers (10) in order to constantly push the two movable sections (11) of the two levers (10), moving said two movable sections (11) apart and positioning the clip (1) in idle in closing position.

8. The assembly of anyone of preceding claims, wherein said clip (1) is made with low-density polyethylene and/or polymers.
